(19) **Europäisches Patentamt**
**European Patent Office**
**Office européen des brevets**

(11) **EP 4 414 765 B1**

(12) **EUROPÄISCHE PATENTSCHRIFT**

(45) Veröffentlichungstag und Bekanntmachung des Hinweises auf die Patenterteilung:
**14.01.2026 Patentblatt 2026/03**

(21) Anmeldenummer: **24154084.8**

(22) Anmeldetag: **26.01.2024**

(51) Internationale Patentklassifikation (IPC):
**G02B 21/00** (2006.01)   **G02B 21/36** (2006.01)
**G06T 5/50** (2006.01)   *G02B 21/16* (2006.01)
**G01N 21/64** (2006.01)

(52) Gemeinsame Patentklassifikation (CPC):
**G02B 21/0032; G02B 21/0076; G02B 21/365; G02B 21/367; G06T 5/50;** G01N 21/6458; G02B 21/16

(54) **VERFAHREN ZUR GENERIERUNG MIKROSKOPISCHER SCHICHTAUFNAHMEN 3-DIMENSIONALER FLUORESZIERENDER OBJEKTE SOWIE VORRICHTUNG, COMPUTERPROGRAMM UND COMPUTERLESBARES SPEICHERMEDIUM**

METHOD FOR GENERATING MICROSCOPIC LAYERED IMAGES OF 3-DIMENSIONAL FLUORESCENT OBJECTS AND DEVICE, COMPUTER PROGRAM AND COMPUTER-READABLE STORAGE MEDIUM

PROCÉDÉ DE GÉNÉRATION D'IMAGES MICROSCOPIQUES DE COUCHES D'OBJETS FLUORESCENTS TRIDIMENSIONNELS, DISPOSITIF, PROGRAMME INFORMATIQUE ET SUPPORT D'ENREGISTREMENT LISIBLE PAR ORDINATEUR

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **08.02.2023 DE 102023102991**

(43) Veröffentlichungstag der Anmeldung:
**14.08.2024 Patentblatt 2024/33**

(73) Patentinhaber: **Till I.D. GmbH**
**82152 Planegg (DE)**

(72) Erfinder:
• **Uhl, Rainer**
**80539 München (DE)**
• **Schropp, Martin**
**München (DE)**

(74) Vertreter: **Fleuchaus & Gallo Partnerschaft mbB**
**Steinerstraße 15/A**
**81369 München (DE)**

(56) Entgegenhaltungen:
**DE-A1- 10 330 716    DE-A1- 102006 031 177**

**Beschreibung**

**Technisches Gebiet**

Die vorliegende Erfindung betrifft ein Verfahren sowie eine Vorrichtung zur Generierung mikroskopischer Schichtaufnahmen 3-dimensionaler fluoreszierender Objekte, wobei die Schichtaufnahmen weitgehend von Störsignalen aus anderen Ebenen befreit sind.

**Hintergrund**

Ziel einer fluoreszenzmikroskopischen 3D-Bildaufnahme ist es, alle von einem Mikroskop detektierten Photonen eindeutig einem Ort im 3-dimensionalen Objektraum zuordnen zu können, an dem sie generiert wurden. Will man dies nicht mit Hilfe eines sequenziell abtastenden Laserscan-Verfahrens erreichen, das inhärent langsam und probenschädigend ist, sondern durch 2D-Parallel-Detektion mit Hilfe eines Flächensensors (Kamera), ist die gewünschte eindeutige Zuordnung außerordentlich schwierig, vor allem beim Einsatz von Objektiven, die einer hohen numerischen Apertur wegen nur eine sehr geringe Schärfentiefe aufweisen. In typischen biologischen Applikationen kommen oft auf jedes richtig zugeordnete Photon 10 Photonen oder mehr, die an ganz anderer Stelle im 3-dimensionalen Raum generiert wurden. Dies bedeutet, dass das eigentliche Signal in einem Hintergrund verschwindet, der viel heller leuchtet als der Ort, dessen Helligkeit registriert werden soll.

Da in der Fluoreszenzmikroskopie die Signalamplitude in der Regel einer Poisson-Statistik unterliegt, leitet sich das Rauschen des gesuchten Signals von der Größe des Gesamtsignals ab, in dem es sich verbirgt, und wenn das gesuchte Signal nur einen Bruchteil des gemessenen Gesamtsignals ausmacht, kann es im Rauschen des Gesamtsignals untergehen. Während ein Signal von 100 registrierten Photonen, das vor einem dunklen Hintergrund registriert werden kann, ein Signal/Rausch Verhältnis (S/R) von Wurzel 100, also 10 aufweist, sinkt dieser Wert vor einem Hintergrund von 10.000 registrierten Photonen auf 1. Dass das interessierende Signal nur im einstelligen Prozentbereich des aus anderen Fokusebenen stammenden Hintergrundsignals ausmacht, ist durchaus nicht unüblich, doch selbst wenn das Hintergrundsignal nur 10x stärker ist als das eigentliche Signal, d.h. wenn die Signal-Modulation bei 10% liegt, ist das erzielbare S/R immer noch dreimal kleiner als wenn man das pure Signal messen könnte. Dokument DE 103 30 716 A1 offenbart ein Verfahren und eine Anordnung zum Eliminieren von Falschlicht bei der Anwendung von Weitfeldoptiken zur Abbildung von heterogen leuchtenden Objekten. Hierbei werden unter Verwendung einer strukturierten Beleuchtung mehrere Bilder aufgenommen und addiert und auf Grundlage der addierten Bilder eine Helligkeitsnormierung durchgeführt. Dokument DE 10 2006 031 177 A1 offenbart Verfahren zur Erzeugung eines Bildes einer dünnen Schicht eines Objekts bei Verwendung einer Weitfeldoptik bei dem ein Beleuchtungsmuster über die Probe bewegt wird und falschlichtkorrigierte Bilder durch Bildung eines Differenzbildes aus erfassten Bildern ermittelt werden. Dokument US 2016 / 0 231 246 A1 offenbart Verfahren zur Hintergrundkorrektur in Bildern biologischer Proben, bei denen die Intensitätswerte eines Bildes oder eines Ausschnitts eines Bildes ("region-of-interest") analysiert werden um Hintergrundrauschen zu identifizieren. Dokument US 2005 / 0 153 356 A1 offenbart Verfahren zur Signalkorrektur für die Auswertung homogen beleuchteter Proben, wie beispielsweise Multiwellplatten.

**Zusammenfassung der Erfindung**

Entsprechend ist es eine Aufgabe der vorliegenden Erfindung, die aus dem Stand der Technik bekannten Nachteile oder Einschränkungen wenigstens teilweise zu umgehen. Diese Aufgabe wird erfindungsgemäß durch ein Verfahren gemäß Anspruch 1, eine Vorrichtung gemäß Anspruch 11, ein Computerprogramm gemäß Anspruch 12 sowie ein computerlesbares Speichermedium gemäß Anspruch 13 gelöst. Vorteilhafte Ausgestaltungen sind Gegenstand der jeweiligen Unteransprüche.

Entsprechend offenbart die vorliegende Erfindung in einem Aspekt ein Verfahren zur Generierung mikroskopischer Schichtaufnahmen 3-dimensionaler fluoreszierender Objekte in einer Probe, umfassend: das Beleuchten wenigstens eines ersten Bereichs der Probe durch ein aus einer Vielzahl von Lichtinseln gebildetes regelmäßiges Beleuchtungsmuster, wobei die Lichtinseln im Beleuchtungsmusters in einem solchen Abstand angeordnet sind, dass die Anregungsintensität außerhalb der Inselbereiche im Fokus des Mikroskopobjektivs gegen Null geht, das Detektieren eines von der Probe emittierten Emmisionssignals; die Interpolation von ersten Störsignalen, die aus Regionen außerhalb der den Beleuchtungsinseln entsprechenden Emmisionsignale stammen; das Erzeugen eines 2-dimensionalen Störsignal-Landkarte aus den interpolierten Störsignalen; und das Erzeugen eines von Störsignalen befreiten Emissionsbilds des im Muster-Raster beleuchteten Objekts durch Subtraktion des 2-dimensionalen Störsignal-Landkarte vom detektierten Emmisionssignal.

In Ausführungsformen des erfindungsgemäßen Verfahrens kann das Beleuchtungsmuster so gewählt werden, dass, insbesondere in Abhängigkeit von der zur untersuchenden Probe, das Signal-Rausch-Verhältnis optimiert wird.

In Ausführungsformen des erfindungsgemäßen Verfahrens kann das Beleuchtungsmuster so gewählt werden, dass der Abstand der Beleuchtungsinseln hinsichtlich einer vorgegebenen Anzahl an aufzunehmende Bilder und einem vorgegebenen Kontrast optimiert wird.

In Ausführungsformen des erfindungsgemäßen Verfahrens kann das Beleuchtungsmuster in einem iterativen Prozess automatisch an die jeweilige zu untersuchende Probe angepasst werden, um die oben beschrieben Kriterien zu erfüllen. Hierbei kann insbesondere eine adaptierbare Beleuchtungseinheit verwendet werden, die es erlaubt Größe, Anzahl und Anordnung der Beleuchtungsinseln zu verändern. Entsprechend können in Testaufnahmen oben beschriebene Parameter bestimmt werden und anschließend kann - sofern nötig - das Beleuchtungsmuster verändert werden.

In einer Ausführungsform kann das erfindungsgemäße Verfahren ferner das wiederholte Verschieben des Beleuchtungsmusters relativ zur Probe oder der Probe relativ zum Beleuchtungsmuster unter beibehalten der Fokusebene zur Beleuchtung eines weiteren Bereichs der Probe umfassen. Die Verschiebung des Musters relativ zur Probe erfolgt hierbei entweder bei unbewegter Probe durch Verschiebung des Musters in der Ebene, vorzugsweise mit Hilfe eines Mustergenerators, oder durch Verschiebung der Probe bei feststehendem Muster. Das Verfahren kann dann an der jeweiligen neuen Position des Beleuchtungsmusters relativ zur Probe wiederholt werden, bis durch Zusammensetzen der Einzelbilder eine gewünschte Auflösung im Ergebnisbild erreicht wird oder bis alle Bereiche der Probe wenigstens einmal beleuchtet wurden und somit durch Zusammensetzen der Einzelbilder der jeweiligen Position, ein vollständiges Bild wenigstens eines Bereichs der Probe erstellt werden.

Entsprechend kann eine Ausführungsform des erfindungsgemäßen Verfahrens ferner das additive Zusammenfügen der von Störsignalen befreiten Emissionsbildern zu einer Schichtaufnahme der Probe in der betreffenden Fokusebene.

In einer Ausführungsform des erfindungsgemäßen Verfahrens kann ein gemessene Emissionssignal für jede einzelne Position des Beleuchtungsmusters auf der Probe mit einem mittels der Punktspreiz-Funktion des verwendenden Mikroskops berechneten Emissionssignal verglichen werden und aus der Differenz beider Signale zweite Störsignale ermittelt werden.

In einer Ausführungsform des erfindungsgemäßen Verfahrens kann das Störsignal durch iterative Entfaltung weiter reduziert wird, indem neben dem Objektsignal aus den Inseln auch die Anregungsintensitäten in den Rohbildern iterativ berechnet werden, wobei sich die Iterationszyklen für Objektsignale und Anregungsintensitäten jeweils abwechseln.

In einer Ausführungsform des erfindungsgemäßen Verfahrens können Störsignale unter Einbeziehung benachbarter Fokus-Ebenen bestimmt werden.

In bevorzugten Ausführungsformen des erfindungsgemäßen Verfahrens kann das Beleuchtungsmuster so konfiguriert sein, dass die Fläche der Beleuchtungsinseln in der Fokusebene zwischen 5 und 20% der gesamten, in einem Messvorgang vom Muster beleuchteten Fläche darstellt.

Ein Aspekt der Erfindung betrifft ferner eine Vorrichtung zur Generierung mikroskopischer Schichtaufnahmen 3-dimensionaler fluoreszierender Objekte in einer Probe, umfassend ein Objektiv, eine Beleuchtungseinheit zum Beleuchten der Probe in Form eines aus einer Vielzahl von Lichtinseln gebildetes Beleuchtungsmuster, wobei die Lichtinseln im Beleuchtungsmusters in einem solchen Abstand angeordnet sind, dass die Anregungsintensität außerhalb der Inselbereiche im Fokus des Mikroskopobjektivs gegen Null geht, ein Detektor zum Erfassen eines von der Probe emittierten Emissionssignalen, einer Anordnung zum Verschieben des Beleuchtungsmusters relativ zur Probe oder der Probe relativ zum Beleuchtungsmuster, sowie wenigstens eine Steuereinheit, wobei die Vorrichtung konfiguriert ist, die vorstehend beschriebenen Verfahren auszuführen.

Ein Aspekt der Erfindung betrifft ein Computerprogramm mit Anweisungen, die, wenn das Programm auf einer wie vorstehend beschriebenen Vorrichtung ausgeführt wird, die Vorrichtung veranlassen, eines der vorstehend beschriebenen Verfahren auszuführen.

Ein Aspekt der Erfindung betrifft ein computerlesbares Speichermedium, das Anweisungen enthält, die, auf einer wie vorstehend beschriebenen Vorrichtung ausgeführt, die Vorrichtung veranlassen, eines der vorstehend beschriebenen Verfahren auszuführen.

**Kurzbeschreibung der Abbildungen**

Weitere Aspekte der Erfindung ergeben sich aus der nachfolgenden detaillierten Beschreibung bevorzugter Ausführungsformen und den beigefügten Abbildungen. Hierbei zeigen:

Abbildung 1 einen Teil einer erfindungsgemäßen Vorrichtung;
Abbildung 2 den Ablauf des erfindungsgemäßen Verfahrens;
Abbildungen 3 bis 13 zeigen exemplarisch die Anwendung des erfindungsgemäßen Verfahrens auf Bilddaten;
Abbildungen 14 bis 18 zeigen Filterfunktionen zur Interpolation des Störsignals.

## Detaillierte Beschreibung

Der störende Hintergrund lässt sich mit einer Raster-Bildaufnahme reduzieren, bei der statt der gesamten Probe nur repräsentative inselförmige Proben-Areale in der betreffenden Fokusebene das Objektivs beleuchtet (angeregt) werden. Dazu verwendet man, wie in DE 10 2011 114 500 A1, Beleuchtungsinseln, die in einem regelmäßigen Schachbrett oder Hexagon Muster angeordnet sind. Gemäß der vorliegenden Erfindung wählt man die "Intensitäts-Gräben" zwischen den Anregungs-Inseln so, dass an ihrer tiefsten Stelle keine Anregung stattfinden kann. Die dann gemessenen Intensitäts-profile werden mit der bekannten Phasenlage/Position des anregenden Musters verglichen und aus dem Vergleich wird eine zweidimensionale "Störungs-Landkarte" erstellt, die man vom gemessenen Intensitäts-Profil abziehen kann, um so ein weit-gehend "ungestörtes" Rasterbild zu erhalten.

Da die erfindungsgemäße Vorgehensweise nicht nur mit Beleuchtungsinseln von beugungslimitierter Größe funktioniert, sondern auch, wenn die Inseln des Beleuchtungsmusters deutlich größer sind, d.h. wenn das Raster gröber ausfällt, stellt die Inselgröße einen weiteren Parameter dar, der bei der Ermittlung des für eine gegebene Probe optimalen Musters in Frage kommt.

Das S/R eines erfindungsgemäß von Störungen befreiten Rasterbilds wird durch das Rauschen des Hintergrunds gleich zweimal beeinträchtigt. Zum einen dadurch, dass die ortsabhängig gemessene Intensität aus dem Inselinneren die Wurzelsumme der Rauschbeiträge des gewünschten Signals und des Störsignals enthält, und zum anderen dadurch, dass das Störsignal, das man subtrahieren möchte, ebenfalls verrauscht ist. Während man das ortsabhängig gemessene Signal aus dem Inselinneren gewöhnlich keinerlei räumlichen Filterung unterziehen möchte, um ein möglichst hochaufgelöstes "Inselbild" zu erhalten, kann man dies beim Subtrahenden durchaus tun und damit die Störungs-Landkarte weitgehend rauschfrei machen.

Die Information darüber, wie stark das S/R des von Störungen befreiten Rasterbilds noch durch verbleibende Rauschbeiträge von Licht aus anderen Ebenen beeinträchtigt ist, lässt sich aus der "Tiefe der Gräben" zwischen den gemessenen "Emissions-Inseln" ablesen. Anhand einer "Probemessung" lassen sich aus der "Grabentiefe" die Parameter Inselgröße und Inselabstand ermitteln, die für ein gegebenes Präparat den optimalen Kompromiss zwischen einem maximalen S/R auf der einen und einem möglichst repräsentativen Raster auf der anderen Seite ergeben. Liegen die Inseln zu weit auseinander, geht zeitliche Auflösung verloren, da dann mehr Rohbilder aufgenommen werden müssen. Liegen sie zu nahe beieinander (Grenzfall Weitfeld-Bildaufnahme) dominiert das Störsignal das Bild und die Beleuchtungsgräben sind nicht mehr messbar. Erfindungsgemäß lässt sich dieser optimale Kompromiss nicht nur ermitteln, sondern auch experimentell einstellen.

Erfolgt die Bildaufnahme in einer Weise, dass eine räumlich symmetrische Grabentiefe um die Beleuchtungsinseln resultiert, wird man das Beleuchtungsraster ebenfalls symmetrisch auslegen. Bei einer spaltkonfokalen Bildaufnahme wie in DE 10 2011 114 500 A1 hingegen resultiert um die Beleuchtungsinseln herum ein asymmetrisches Emissionsprofil. Für ein räumlich homogenes S/N kann man in diesem Fall auf ein entsprechend gestauchtes Beleuchtungsgitter zurückgreifen, d.h. den Inselabstand in Scan-Richtung enger auslegen als senkrecht dazu.

Hat man mit Hilfe der oben beschriebenen Vorgehensweise ein "störungsbereinigtes Rasterbild" generiert, kann man durch mehrmaliges Wiederholung des oben beschriebenen Vorgangs bei entsprechend veränderter Musterposition relativ zur Probe das Raster feiner machen, und wenn die jeweilige Musterpositionen entsprechend gewählt werden, kann eine Probe mit einer berechenbaren Anzahl von Musterverschiebungen vollständig abgetastet werden, d.h. man erhält erfindungsgemäß durch Aufsummieren der störungsbereinigten Rasterbilder eine Schichtaufnahme der jeweiligen Objektiv-Fokusebene.

Ein 3D (Raster- oder Gesamt-)Bild erhält man, indem man das oben beschriebene Verfahren zur Gewinnung von Schichtaufnahmen in mehr als einer Fokusebene wiederholt. Im Fall, dass keine vollständig volumenabtastende Rasterung gefordert wird, weil diese zu viele Bilddaten generieren würde, kann bei den einzelnen Schichtaufnahmen das Muster relativ zur darunter liegenden Ebene versetzt angelegt sein. Werden jedoch zur Gewinnung einer besonders naturgetreuen Störungs-landkarte für eine Ebene auch die darunter und darüber liegenden Ebenen herangezogen, empfiehlt es sich, den Bildstapel ohne laterale Verschiebung des Musters auf der Probe zu erzeugen.

Die Relativ-Bewegung von Muster und Probe kann entweder dadurch bewerkstelligt werden, dass eine stationäre Probe mit Hilfe eines beweglich ausgestatteten Beleuchtungsgitters angeregt wird, oder dadurch, dass die Probe durch ein feststehendes

Vom Stand der Technik unterscheidet sich die vorgeschlagene Vorgehensweise dadurch, dass das gewünschte Signal nicht durch Ausschneiden, d.h. Weglassen von unerwünschten Signalbeiträgen generiert wird, wie das die konfokale Blende eines Punktscanners tut oder die Vielzahl konfokaler Pinholes im Spinning Disk System; vielmehr nutzt die Erfindung zur Bildgenerierung nicht nur das aus den Bereichen der Anregungs-Inseln stammende Signal, sondern auch das gemessene "Störsignal" zwischen den Anregungsinseln, um bereits im Vorfeld weiterer Berechnungen einen großen Teil des Störsignals aus Ebenen oberhalb und unterhalb der Fokusebene vom innerhalb der Inseln gemessenen Signal zu entfernen.

Hierzu wird das außerhalb der Beleuchtungsinseln registrierte Störsignal auf das gesamte Bildfeld interpoliert.

Es resultiert eine zweidimensionale Störungs-landkarte, die von den jeweiligen Emissionsmusterbildern subtrahiert wird, um so für jede Musterposition ein weitgehend von Außerfokus-Störungen befreites Bild zu generieren. Zusätzlich können die Inselbereiche anschließend als digitale konfokale Filter verwendet werden um Rauschen aus den Außerfokus-Ebenen zu entfernen. Nachfolgend werden die so generierten Muster-Bildaufnahmen (Rohbilder) mittels Addition zu einer Schichtaufnahme zusammengesetzt. Hierbei wird im Falle einer Filterung mit digitalen Pinholes die Tatsache rechnerisch berücksichtigt, dass nicht jeder Bildpunkt die gleiche Lichtmenge aus den Pinholes über alle Musterpositionen erhält.

Unter weiterer Ausnutzung der in den Rohbildern enthaltenen Information kann die Störung noch genauer ermittelt werden, indem das gemessene Emissionssignal für jede einzelne Position des Beleuchtungsmusters auf der Probe mit dem durch die Punktspreiz-Funktion des Mikro-skops berechneten Emissionssignal verglichen wird.

Das nach der Subtraktion in den Rohbildern verbliebene Störsignal kann durch iterative Entfaltung weiter reduziert werden. Hierbei kann sowohl das Objektsignal aus den Inseln als auch die Anregungsintensitäten in den Rohbildern iterativ berechnet werden, wobei sich die Iterations-zyklen für Objektsignale und Anregungsintensitäten jeweils abwechseln (Ping-Pong-Iteration).

Die Berechnung der Muster-Entfaltung beschränkt sich im einfachsten Fall auf ein in einer Fokusebene aufgenommenes zweidimensionale Muster-Bild (no *neighbour*), kann aber - mit gesteigertem mathematischen Aufwand - auch unter Einbeziehung benachbarter Fokus-Ebenen generiert werden (*nearest neighbour*). Konsequenterweise kann ein ganzer Musterstapel aufgenommen werden, 3-dimensional entfaltet und danach erst durch Addition mit anderen, in x/y-Richtung verschobenen Musterstapeln zu einem 3D-Bild zusammengesetzt werden.

Wie viele Rohbilder für ein gegebenes Muster benötigt werden, um die gesamte Detektorfläche gleichmäßig abzutasten, hängt von der Art des Musters (Schachbrett oder hexagonal), von Form und Größe der anregenden Lichtinseln, deren jeweiligen Gitterabständen und damit dem jeweiligen Füllfaktor des Musters ab. Bei einer gleichmäßigen flächigen Beleuchtung, bei der die Punktspreizfunktion des resultierenden Emissionsmusters symmetrisch ist, wird man auch ein symmetrisches Anregungsmuster wählen, bei einer spaltförmigen Beleuchtung mit spaltkonfokaler Detektion wie in (DE 10 2011 114 500 A1) hingegen, kann der Gitterabstand in Spalt-Bewegungsrichtung verringert, und gegebenenfalls senkrecht dazu gespreizt werden.

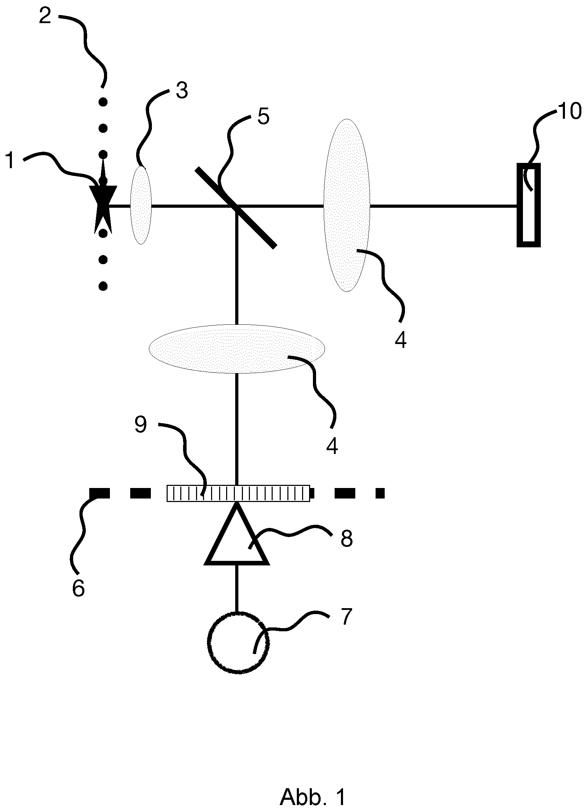

Erfindungsgemäß beleuchtet das in Abbildung 1 gezeigte Mikroskop das Untersuchungsobjekt 1 in der Brennebene 2 eines Objektivs 3, wobei es, mit Hilfe einer Tubuslinse 4 und eines Farbteilers 5, die anregungsseitige Bildebene 6 so auf die Probe 1 abbildet, dass dort ein scharfes Bild dieser Ebene 6 entsteht. Ein von einer Lichtquelle 7 gespeister Mustergenerator 8 erzeugt in Ebene 6 das gewünschte Muster 9, und eine Kamera 10 zeichnet in der Bildebene des Mikroskops das Emissionsmuster auf, das vom verkleinerten Bild des Beleuchtungsmusters 9 in der Objektebene 2 generiert wurde. Die Verschiebung des Musters 9 relativ zum Untersuchungsobjekt 1 erfolgt entweder bei unbewegtem Untersuchungsobjekt 1 durch Verschiebung des Musters in der Ebene 6 mit Hilfe des Mustergenerators 8, oder durch Verschiebung des Untersuchungsobjekts 1 bei feststehendem Muster 9.

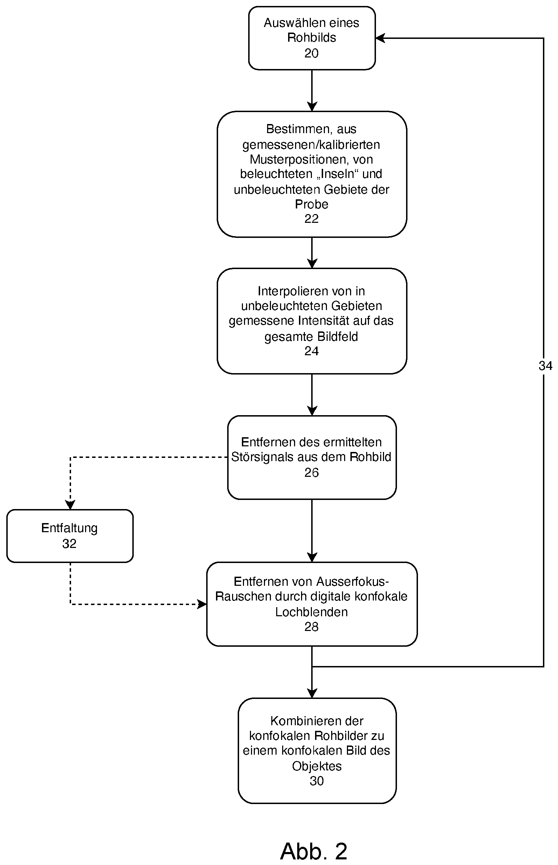

Abbildung 2 zeigt schematisch den Ablauf des erfindungsgemäßen Verfahrens das beginnend mit Schritt 20 auf jedes Rohbild, also auf jedes Bild in einer Position des Beleuchtungsmusters relativ zum Untersuchungsobjekt (oder Probe) angewandt wird, wobei das Untersuchungsprojekt wie vorstehend, insbesondere im Zusammenhang mit Abbildung 1 beschrieben, beleuchtet wird und das daraus resultierende Emissionssignal mit einem geeigneten Detektor detektiert wird. Nachfolgend werden in Schritt 22 des erfindungsgemäßen Verfahrens aus gemessenen/kalibrierten Musterpositionen, die beleuchteten "Inseln" und unbeleuchteten Gebiete der Probe bestimmt. Basierend darauf werden in Schritt 24 des Verfahrens etwaige Signale in den unbeleuchteten Gebieten der Probe interpoliert und so ein Störsignal ermittelt. Grundlage hierfür ist die Annahme, dass in unbeleuchteten Gebieten kein Signal vorhanden sein sollte und somit alle in diesen Bereichen detektierten Signale per Definition Störsignale sind. Die so ermittelten Störsignale werden in Schritt 26 von dem Rohbild subtrahiert und so das Rohbild von den Störsignalen bereinigt. Des Weiteren kann in Schritt 28 im Bild enthaltenes Außerfokus-Rauschen unter Verwendung der Inselbereiche als digitale konfokale Filter entfernt werden. Optional kann das Verfahren um eine im Schritt 32 erfolgende, vorstehend im Detail beschriebene, Entfaltung erweitert werden. Hierbei wird erfindungsgemäß das gemessene Emissionssignal für jede einzelne Position des Beleuchtungsmusters auf der Probe mit dem durch die PSF des Mikroskops berechneten Emissionssignal verglichen und so ein weiteres Störsignal ermittelt, um welches das jeweilige Bild bereinigt werden kann. Das erfindungsgemäße Verfahren wird für jede Position des Beleuchtungsmusters relativ zur Probe wiederholt (Schritt 34). Nachfolgend können in Schritt 30 die einzelnen Rohbilder, die jeweils eine Position des Beleuchtungsmusters relativ zur Probe entsprechen und somit jeweils einen Teilbereich der Probe darstellen zu einem vollständigen, konfokalen Bild der Probe bzw. des Untersuchungsobjekts zusammengefügt werden. Durch Wiederholung des Verfahrens in verschiedenen Fokusebenen können durch Kombination der einzelnen Schichtbilder dreidimensionale Rekonstruktionen des Untersuchungsobjekts erzeugt werden.

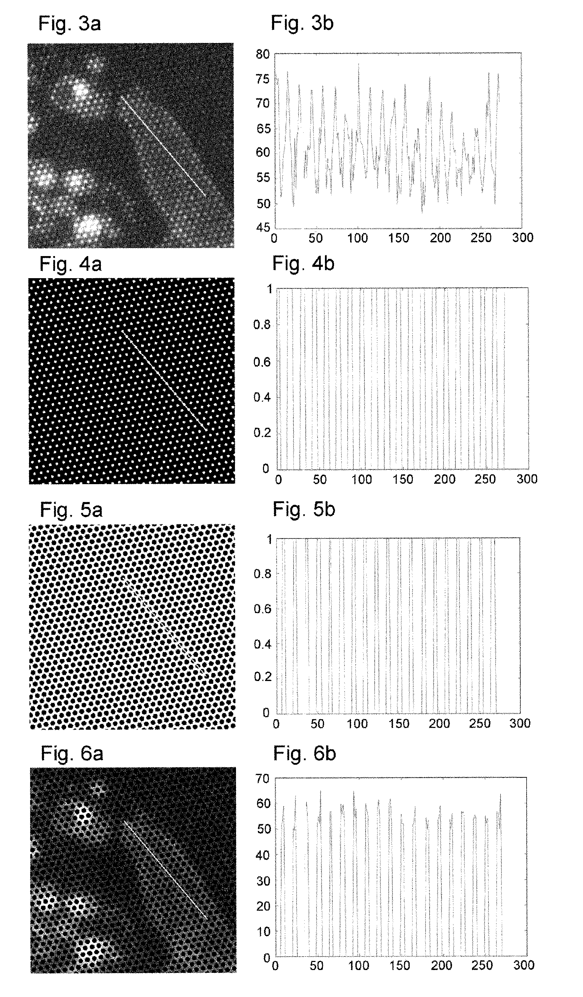

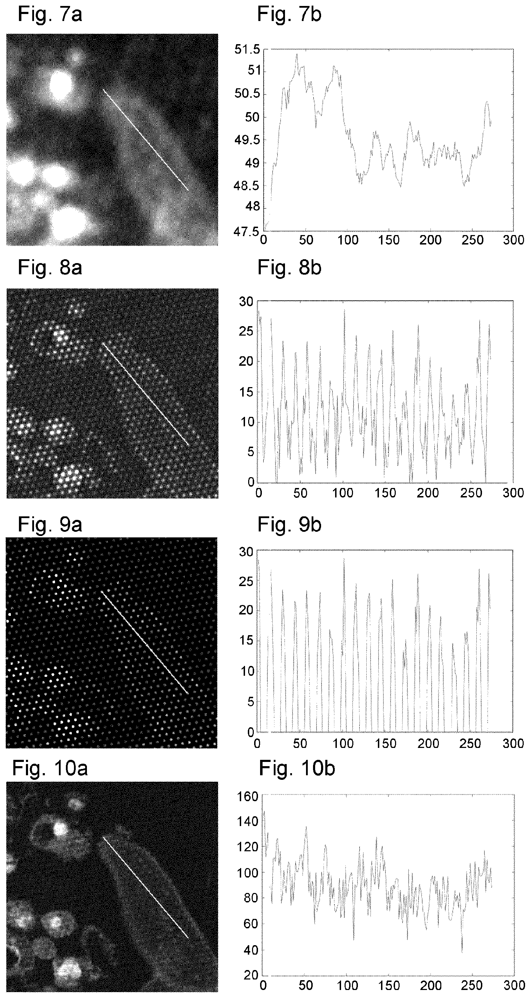

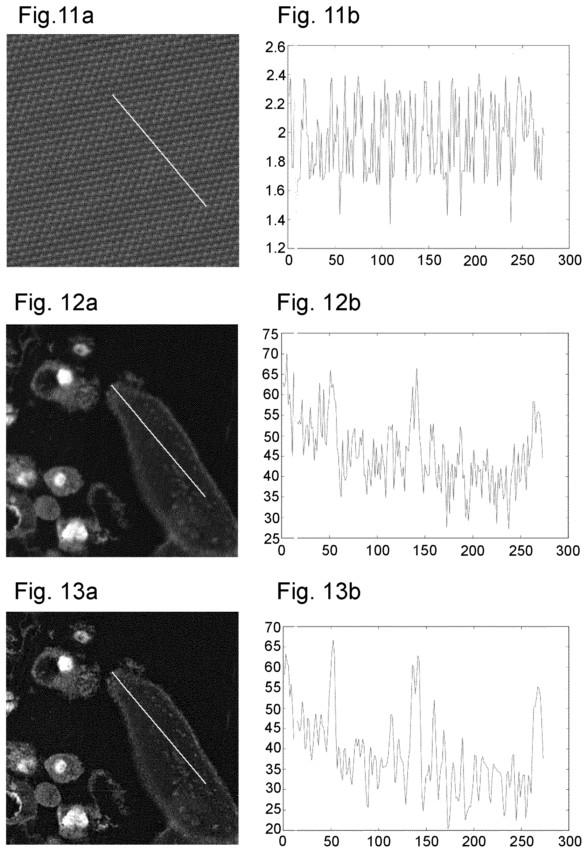

Abbildungen 3 bis 13 zeigen die Anwendung des erfindungsgemäßen Verfahrens, wobei die Abbildungen "a" jeweils die Bilddaten zeigen und die Abbildungen "b" jeweils den Line Plot eines Intensitätsprofils an der weißen Linie in der zugehörigen Abbildung "a" zeigen. Hierbei zeigt Abbildung 3 das erste Rohbild (eine mikroskopische Aufnahme eines oralen Bakterien-Biofilm eines Paradontitis Patienten). Abbildung 4 zeigt die Inselbereiche des Beleuchtungsmusters in denen die Probe im Fokus voll angeregt wurde. Abbildung 5 zeigt die Bereiche außerhalb der Beleuchtungsinseln. Abbildung 6 zeigt das Signal von Rohbild aus Abbildung 3 aus den Bereichen außerhalb der Beleuchtungsinseln. Abbildung 7 zeigt das interpolierte Störsignal/Außerfokus-Signal aus Abbildung 6. Abbildung 8 zeigt das Rohbild gemäß Abbildung 3 abzüglich des Störsignals aus Abbilddung 7, also das "bereinigte Infokus-Signal". Abbildung 9 zeigt das bereinigte Infokussignal nachdem es mit digitalen *Pinholes* (entsprechen den Insel-Bereichen aus Abbildung 4) gefiltert wurde. Die anhand der Abbildungen 3 bis 9 beschriebenen Verfahrensschritte können für alle Rohbilder, d.h. Rohbilder mit anderen Position des Beleuchtungsmuster relativ zur Probe wiederholt werden. Nachfolgend können die anhand von Abbildungen 10 bis 13 beschriebenen Schritte des erfindungsgemäßen Verfahrens durchgeführt werden. Hierbei zeigt Abbildung 10 das aufsummierte bereinigte, gefilterte Infokus-Signal als konfokales Bild der Probe. Abbildung 11 zeigt einen optionalen Korrektur-Frame, der in Fällen in denen nach dem digitalen Pinhole Filter nicht mehr alle Pixel des Ergebnisbildes die gleiche Menge an Signal aus den Rohbildern erhalten verwendet werden kann um weitere Korrekturen vorzunehmen. Abbildung 12 zeigt den optionalen Schritt in dem das konfokale Bild aus Abbildung 10, durch den Korrektur-Frame aus Abbildung 11 dividiert bzw. eine "Pinhole-Korrektur" durchgeführt wurde. Abbildung 13 zeigt ein korrigiertes und Wienergefiltertes konfokales Ergebnis-Bild.

Die Anzahl der Verschiebungen des Beleuchtungsmusters relativ zur Probe, die für das Erlangen einer gewünschten Beleuchtung der Probe und damit einer gewünschten Auflösung des durch das Aufsummieren der Einzelbilder generierten Rasterbildes ist abhängig von der Art des Beleuchtungsmusters.

Hierbei kann die minimale Anzahl der notwendigen Verschiebungen des Beleuchtungsmusters relativ zur Probe (oder der Probe relativ zum Beleuchtungsmuster) zum Erlangen einer gewünschten Abtastung der Probe in Abhängigkeit des Musters (z.B. hexagonal oder Schachbrettmuster) gemäß den nachfolgenden Formeln berechnet werden.

Formel 1 beschriebt die Frequenzvektoren des Hexagons definiert über die Indizes m und n aus Tabelle 1. Hierbei gilt für alle Frequenzen, dass (m+n) gerade sein müssen.

$$\vec{k}_{(m,n)} = \frac{\pi}{p} \begin{pmatrix} m \\ n \end{pmatrix}$$

Formel 1:

Formel 2 beschriebt die Frequenzvektoren des Schachbrettmusters definiert über die Indizes m und n aus Tabelle 2. Hierbei gilt für alle Frequenzen, dass (m+n) gerade sein müssen.

$$\vec{k}_{(m,n)} = \sqrt{2}\, \frac{\pi}{p} \begin{pmatrix} m \\ n \end{pmatrix}$$

Formel 2:

Formel 3 bestimmt den Betrag der Frequenz in Einheiten der Grundfrequenz.

$$|\vec{k}_{(m,n)}| / \left( \frac{2\pi}{p} \right)$$

Formel 3:

Nach Formel 4 kann die Verschieberichtung (\vec \Delta) des Hexagons aus dem in Tabelle 1 genannten Parameter kappa (dieser definiert die Richtung) berechnet werden.

$$\theta = \arctan\left( \frac{\sqrt{3}}{2\kappa + 1} \right)$$

Formel 4:

Nach Formel 5 kann die Verschieberichtung (\vec \Delta) des Schachbrettmusters aus dem in der Tabelle 2 genannten Parameter kappa (dieser definiert die Richtung) berechnet werden.

$$\theta = \arctan\left(\frac{1-\kappa}{1+\kappa}\right)$$

Formel 5:

Formel 6 definiert die relative Phasenverschiebung der jeweiligen Frequenz k_m,n (siehe Tabelle 1, Spalte H) für das Hexagon.

$$\Delta\Phi^{\text{Hexagon relativ}}_{(m,n)} := \frac{\vec{k}_{(m,n)} \cdot \vec{\Delta}}{\vec{k}_{(0,2)} \cdot \vec{\Delta}}$$

Formel 6:

Formel 7 definiert die relative Phasenverschiebung der jeweiligen Frequenz k_m,n (siehe Tabelle 2, Spalte H) für das Schachbrettmuster. Für die in Tabelle 2 aufgeführen Werte von kappa (Spalte G) sind die Werte der rel. Phasenverschiebung ganze Zahlen ungleich 0 (natürliche Zahlen).

$$\Delta\Phi^{\text{Schachbrett relativ}}_{(m,n)} := \frac{\vec{k}_{(m,n)} \cdot \vec{\Delta}}{\vec{k}_{(1,1)} \cdot \vec{\Delta}}$$

Formel 7:

Formel 8 erlaubt die Berechnung der für eine bestimmte Menge an in der Anregung enthaltenen Frequenzvektoren für eine artefaktfreie Auswertung (bzw. fehlerfreien Abtastung der Probe) minimal notwendigen Anzahl aufzunehmender Rohbilder. Die Menge der in der Anregung enthaltenen Frequenzvektoren wird in Formel 8 repräsentiert durch die Menge M. Die Anzahl der minimal notwendigen Rohbilder für eine fehlerfreie Auswertung ergibt sich aus der kleinsten natürlichen Zahl, die nicht in der Menge der relativen Phasenverschiebungen für die Frequenzen der Menge M enthalten ist.

$$N_{\text{min.}} = \min\left(\left\{n \in \mathbb{N} \setminus \left\{\Delta\Phi^{\text{relativ}}_{(m,n)} | (m,n) \in \mathbb{M}\right\}\right\}\right)$$

Formel 8:

Tabelle 1 zeigt die möglichen Musterorientierungen und die notwendigen (minimalen) Anzahl an Verschiebungen bzw. Rohbildern für ein hexagonales Beleuchtungsmuster. Hierbei ist Spalte A: Musterperiode in Einheiten der minimal möglichen/auflösbaren Periode von lambda/(2*NA); Spalte B: normalisierte Musterfrequenz; analog zu A, lambda/(NA*p), kann also zwischen 0 und 2 (Rand der OTF) liegen; Spalte C: Entsprechend die maximale Anzahl an Frequenzordnugen, die ein Rohbild enthalten kann; Spalte D, E: Indizes (D: m, E: n) welche die Musterfrequenzen als \vec k = pi/p * [m , n] definieren; Spalte F: Betrag der jeweiligen Frequenz in Einheiten der Grundfrequenz 2pi/p (d.h. der Wert ist immer der selbe wie in Spalte A); Spalte G: der Parameter kappa, der die Musterorientierung als theta = arctan(sqrt(3)/(2*kappa + 1) definiert; Spalte H: Phasenverschiebung der jeweiligen Frequenz relativ zur Phasenverschiebung von k1 (der Frequenz in Zeile 2). Dieser Wert darf niemals 0 werden; diese Bedingung legt den minimalen Wert von kappa fest; Spalte I: Minimale Anzahl an Rohbildern für eine Konfiguration bzw. Musterperiode; Spalte J: der Orientierungswinkel des Musters Theta relativ zur x-Achse; Spalte K: Absoluter Fahrweg des Musters über N Rohbilder in Einheiten der Musterperiode p.

| A | B | C | D | E | F | G | H | I | J | K |
|---|---|---|---|---|---|---|---|---|---|---|
| 1 | 2 | 7 | 0 | 2 | 1 | 1 | 1 | 3 | 30 | 2 |
|  |  |  | 1 | -1 | 1 | 1 | 1 |  | 30 | 2 |
|  |  |  | 1 | 1 | 1 | 1 | 2 |  | 30 | 2 |
| Wurzel(3) | 1,2 | 13 | 1 | -3 | 1,73205081 | 2 | 1 | 6 | 19,1066054 | 3,05505046 |
|  |  |  | 1 | 3 | 1,73205081 | 2 | 4 |  | 19,1066054 | 3,05505046 |
|  |  |  | 2 | 0 | 1,73205081 | 2 | 5 |  | 19,1066054 | 3,05505046 |

(fortgesetzt)

| A | B | C | D | E | F | G | H | I | J | K |
|---|---|---|---|---|---|---|---|---|---|---|
| 2 | 1 | 19 | 2 | -2 | 2 | 2 | 4 | 7 | 19,1066054 | 3,05505046 |
| | | | 2 | 2 | 2 | 2 | 6 | | 19,1066054 | 3,05505046 |
| | | | 0 | 4 | 2 | 2 | 2 | | 19,1066054 | 3,05505046 |
| Wurzel(7) | 0,8 | 31 | 1 | -5 | 2,64575131 | 3 | 1 | 12 | 13,8978862 | 4,163332 |
| | | | 1 | 5 | 2,64575131 | 3 | 6 | | 13,8978862 | 4,163332 |
| | | | 2 | -4 | 2,64575131 | 3 | 5 | | 13,8978862 | 4,163332 |
| | | | 2 | 4 | 2,64575131 | 3 | 9 | | 13,8978862 | 4,163332 |
| | | | 3 | -1 | 2,64575131 | 3 | 10 | | 13,8978862 | 4,163332 |
| | | | 3 | 1 | 2,64575131 | 3 | 11 | | 13,8978862 | 4,163332 |
| 3 | 0,66666667 | 37 | 0 | 6 | 3 | 3 | 3 | 13 | 13,8978862 | 4,163332 |
| | | | 3 | -3 | 3 | 3 | 9 | | 13,8978862 | 4,163332 |
| | | | 3 | 3 | 3 | 3 | 12 | | 13,8978862 | 4,163332 |
| 2 Wurzel(3) | 0,57735027 | 43 | 2 | -6 | 3,46410162 | 3 | 4 | 13 | 13,8978862 | 4,163332 |
| | | | 2 | 6 | 3,46410162 | 3 | 10 | | 13,8978862 | 4,163332 |
| | | | 4 | 0 | 3,46410162 | 3 | 14 | | 13,8978862 | 4,163332 |
| Wurzel(13) | 0,5547 | 55 | 1 | -7 | 3,60555128 | 4 | 1 | 20 | 10,8933946 | 5,29150262 |
| | | | 1 | 7 | 3,60555128 | 4 | 8 | | 10,8933946 | 5,29150262 |
| | | | 3 | 5 | 3,60555128 | 4 | 16 | | 10,8933946 | 5,29150262 |
| | | | 3 | 5 | 3,60555128 | 4 | 16 | | 10,8933946 | 5,29150262 |
| | | | 4 | -2 | 3,60555128 | 4 | 17 | | 10,8933946 | 5,29150262 |
| | | | 4 | 2 | 3,60555128 | 4 | 19 | | 10,8933946 | 5,29150262 |
| 4 | 0,5 | 61 | 4 | -4 | 4 | 4 | 16 | 21 | 10,8933946 | 5,29150262 |
| | | | 4 | 4 | 4 | 4 | 20 | | 10,8933946 | 5,29150262 |
| | | | 0 | 8 | 4 | 4 | 4 | | 10,8933946 | 5,29150262 |
| Wurzel(19) | 0,45883147 | 73 | 5 | -1 | 4,35889894 | 4 | 22 | 21 | 10,8933946 | 5,29150262 |
| | | | 5 | 1 | 4,35889894 | 4 | 23 | | 10,8933946 | 5,29150262 |
| | | | 2 | -8 | 4,35889894 | 4 | 5 | | 10,8933946 | 5,29150262 |
| | | | 2 | 8 | 4,35889894 | 4 | 13 | | 10,8933946 | 5,29150262 |
| | | | 3 | -7 | 4,35889894 | 4 | 10 | | 10,8933946 | 5,29150262 |
| | | | 3 | 7 | 4,35889894 | 4 | 17 | | 10,8933946 | 5,29150262 |
| Wurzel(21) | 0,43643578 | 85 | 1 | -9 | 4,58257569 | 5 | 1 | 30 | 8,94827556 | 6,42910051 |
| | | | 1 | 9 | 4,58257569 | 5 | 10 | | 8,94827556 | 6,42910051 |
| | | | 4 | -6 | 4,58257569 | 5 | 19 | | 8,94827556 | 6,42910051 |
| | | | 4 | 6 | 4,58257569 | 5 | 25 | | 8,94827556 | 6,42910051 |
| | | | 5 | -3 | 4,58257569 | 5 | 26 | | 8,94827556 | 6,42910051 |
| | | | 5 | 3 | 4,58257569 | 5 | 29 | | 8,94827556 | 6,42910051 |
| 5 | 0,4 | 91 | 0 | 10 | 5 | 5 | 5 | 31 | 8,94827556 | 6,42910051 |
| | | | 5 | -5 | 5 | 5 | 25 | | 8,94827556 | 6,42910051 |
| | | | 5 | 5 | 5 | 5 | 30 | | 8,94827556 | 6,42910051 |

(fortgesetzt)

| A | B | C | D | E | F | G | H | I | J | K |
|---|---|---|---|---|---|---|---|---|---|---|
| Wurzel(27) | 0,38490018 | 97 | 3 | -9 | 5,19615242 | 5 | 12 | 31 | 8,94827556 | 6,42910051 |
| | | | 3 | 9 | 5,19615242 | 5 | 21 | | 8,94827556 | 6,42910051 |
| | | | 6 | 0 | 5,19615242 | 5 | 33 | | 8,94827556 | 6,42910051 |
| 2 Wurzel(7) | 0,37796447 | 109 | 2 | -10 | 5,29150262 | 5 | 6 | 31 | 8,94827556 | 6,42910051 |
| | | | 2 | 10 | 5,29150262 | 5 | 16 | | 8,94827556 | 6,42910051 |
| | | | 4 | -8 | 5,29150262 | 5 | 18 | | 8,94827556 | 6,42910051 |
| | | | 4 | 8 | 5,29150262 | 5 | 26 | | 8,94827556 | 6,42910051 |
| | | | 6 | -2 | 5,29150262 | 5 | 32 | | 8,94827556 | 6,42910051 |
| | | | 6 | 2 | 5,29150262 | 5 | 34 | | 8,94827556 | 6,42910051 |
| Wurzel(31) | 0,3592106 | 121 | 1 | -11 | 5,56776436 | 6 | 1 | 42 | 7,58908947 | 7,57187779 |
| | | | 1 | 11 | 5,56776436 | 6 | 12 | | 7,58908947 | 7,57187779 |
| | | | 5 | -7 | 5,56776436 | 6 | 29 | | 7,58908947 | 7,57187779 |
| | | | 5 | 7 | 5,56776436 | 6 | 36 | | 7,58908947 | 7,57187779 |
| | | | 6 | -4 | 5,56776436 | 6 | 37 | | 7,58908947 | 7,57187779 |
| | | | 6 | 4 | 5,56776436 | 6 | 41 | | 7,58908947 | 7,57187779 |
| 6 | 0,33333333 | 127 | 0 | 12 | 6 | 6 | 6 | 43 | 7,58908947 | 7,57187779 |
| | | | 6 | -6 | 6 | 6 | 36 | | 7,58908947 | 7,57187779 |
| | | | 6 | 6 | 6 | 6 | 42 | | 7,58908947 | 7,57187779 |
| Wurzel(37) | 0,32879797 | 139 | 3 | -11 | 6,08276253 | 6 | 14 | 43 | 7,58908947 | 7,57187779 |
| | | | 3 | 11 | 6,08276253 | 6 | 25 | | 7,58908947 | 7,57187779 |
| | | | 4 | -10 | 6,08276253 | 6 | 21 | | 7,58908947 | 7,57187779 |
| | | | 4 | 10 | 6,08276253 | 6 | 31 | | 7,58908947 | 7,57187779 |
| | | | 7 | -1 | 6,08276253 | 6 | 45 | | 7,58908947 | 7,57187779 |
| | | | 7 | 1 | 6,08276253 | 6 | 46 | | 7,58908947 | 7,57187779 |
| Wurzel(39) | 0,32025631 | 151 | 2 | -12 | 6,244998 | 6 | 7 | 43 | 7,58908947 | 7,57187779 |
| | | | 2 | 12 | 6,244998 | 6 | 19 | | 7,58908947 | 7,57187779 |
| | | | 5 | -9 | 6,244998 | 6 | 28 | | 7,58908947 | 7,57187779 |
| | | | 5 | 9 | 6,244998 | 6 | 37 | | 7,58908947 | 7,57187779 |
| | | | 7 | -3 | 6,244998 | 6 | 44 | | 7,58908947 | 7,57187779 |
| | | | 7 | 3 | 6,244998 | 6 | 47 | | 7,58908947 | 7,57187779 |
| Wurzel(43) | 0,30499714 | 163 | 1 | -13 | 6,55743852 | 7 | 1 | 56 | 6,58677555 | 8,71779789 |
| | | | 1 | 13 | 6,55743852 | 7 | 14 | | 6,58677555 | 8,71779789 |
| | | | 6 | -8 | 6,55743852 | 7 | 41 | | 6,58677555 | 8,71779789 |
| | | | 6 | 8 | 6,55743852 | 7 | 49 | | 6,58677555 | 8,71779789 |
| | | | 7 | -5 | 6,55743852 | 7 | 50 | | 6,58677555 | 8,71779789 |
| | | | 7 | 5 | 6,55743852 | 7 | 55 | | 6,58677555 | 8,71779789 |
| 4 Wurzel(3) | 0,28867513 | 169 | 4 | -12 | 6,92820323 | 7 | 24 | 56 | 6,58677555 | 8,71779789 |
| | | | 4 | 12 | 6,92820323 | 7 | 36 | | 6,58677555 | 8,71779789 |
| | | | 8 | | 6,92820323 | 7 | 60 | | 6,58677555 | 8,71779789 |

(fortgesetzt)

| A | B | C | D | E | F | G | H | I | J | K |
|---|---|---|---|---|---|---|---|---|---|---|
| 7 | 0,28571429 | 185 | 8 | -2 | 7 | 7 | 59 | 56 | 6,58677555 | 8,71779789 |
| | | | 8 | 2 | 7 | 7 | 61 | | 6,58677555 | 8,71779789 |
| | | | 0 | 14 | 7 | 7 | 7 | | 6,58677555 | 8,71779789 |
| | | | 3 | -13 | 7 | 7 | 16 | | 6,58677555 | 8,71779789 |
| | | | 3 | -13 | 7 | 7 | 16 | | 6,58677555 | 8,71779789 |
| | | | 5 | -11 | 7 | 7 | 32 | | 6,58677555 | 8,71779789 |
| | | | 5 | 11 | 7 | 7 | 43 | | 6,58677555 | 8,71779789 |
| | | | 7 | -7 | 7 | 7 | 49 | | 6,58677555 | 8,71779789 |
| | | | 7 | 7 | 7 | 7 | 56 | | 6,58677555 | 8,71779789 |
| 2 Wurzel(13) | 0,2773501 | 197 | 2 | -14 | 7,21110255 | 7 | 8 | 57 | 6,58677555 | 8,71779789 |
| | | | 2 | 14 | 7,21110255 | 7 | 22 | | 6,58677555 | 8,71779789 |
| | | | 6 | -10 | 7,21110255 | 7 | 40 | | 6,58677555 | 8,71779789 |
| | | | 6 | 10 | 7,21110255 | 7 | 50 | | 6,58677555 | 8,71779789 |
| | | | 8 | -4 | 7,21110255 | 7 | 58 | | 6,58677555 | 8,71779789 |
| | | | 8 | 4 | 7,21110255 | 7 | 62 | | 6,58677555 | 8,71779789 |

Tabelle 2 zeigt die möglichen Musterorientierungen und die notwendigen (minimalen) Anzahl an Verschiebungen bzw. Rohbildern für ein Schachbrett-Beleuchtungsmuster. Hierbei ist Spalte A: Musterperiode in Einheiten der minimal möglichen/auflösbaren Periode von lambda/(2*NA); Spalte B: normalisierte Musterfrequenz; analog zu A, lambda/(NA*p), kann also zwischen 0 und 2 (Rand der OTF) liegen; Spalte C: Entsprechend die maximale Anzahl an Frequenzordnugen, die ein Rohbild enthalten kann; Spalte D, E: Indizes (D: m, E: n) welche die Musterfrequenzen als \vec k = sqrt(2)* pi/p * [m , n] definiert; Spalte F: Betrag der jeweiligen Frequenz in Einheiten der Grundfrequenz 2pi/p (d.h. der Wert ist immer der selbe wie in Spalte A); Spalte G: der Parameter kappa, der die Musterorientierung als theta = arctan( (1-kappa)/(1+kappa)) definiert; Spalte H: Phasenverschiebung der jeweiligen Frequenz relativ zur Phasenverschiebung von k1 (der Frequenz in Zeile 2). Dieser Wert darf niemals 0 werden; diese Bedingung legt den minimalen Wert von kappa fest; Spalte I: Minimale Anzahl an Rohbildern für eine Konfiguration bzw. Musterperiode; Spalte J: der Orientierungswinkel des Musters Theta relativ zur x-Achse; Spalte K: Absoluter Fahrweg des Musters über N Rohbilder in Einheiten der Musterperiode p.

| A | B | C | D | E | F | G | H | I | J | K |
|---|---|---|---|---|---|---|---|---|---|---|
| 1 | 2 | 5 | 1 | 1 | 1 | 1 | 1 | 2 | 0 | 1,41421356 |
| | | | 1 | -1 | 1 | 1 | 1 | | 0 | 1,41421356 |
| Wurzel(2) | 1,41421356 | 9 | 0 | 2 | 1,41421356 | 2 | -1 | 4 | -18,434949 | 2,23606798 |
| | | | 2 | 0 | 1,41421356 | 2 | 3 | | -18,434949 | 2,23606798 |
| 2 | 1 | 13 | 2 | 2 | 2 | 2 | 2 | 5 | -18,434949 | 2,23606798 |
| | | | -2 | 2 | 2 | 2 | -4 | | -18,434949 | 2,23606798 |
| Wurzel(5) | 0,89442719 | 21 | 1 | -3 | 2,23606798 | 3 | 5 | 8 | -26,565051 | 3,16227766 |
| | | | 1 | 3 | 2,23606798 | 3 | -1 | | -26,565051 | 3,16227766 |
| | | | 3 | -1 | 2,23606798 | 3 | 7 | | -26,565051 | 3,16227766 |
| | | | 3 | 1 | 2,23606798 | 3 | 5 | | -26,565051 | 3,16227766 |
| 2 Wurzel(2) | 0,70710678 | 25 | 0 | 4 | 2,82842712 | 3 | -4 | 9 | -26,565051 | 3,16227766 |
| | | | 4 | 0 | 2,82842712 | 3 | 8 | | -26,565051 | 3,16227766 |
| 3 | 0,66666667 | 29 | 3 | -3 | 3 | 3 | 9 | 1 0 | -26,565051 | 3,16227766 |
| | | | 3 | 3 | 3 | 3 | 3 | | -26,565051 | 3,16227766 |

(fortgesetzt)

| A | B | C | D | E | F | G | H | I | J | K |
|---|---|---|---|---|---|---|---|---|---|---|
| Wurzel(10) | 0,63245553 | 37 | 2 | -4 | 3,16227766 | 4 | 11 | 1 4 | -30,963757 | 4,12310563 |
| | | | 2 | 4 | 3,16227766 | 4 | -1 | | -30,963757 | 4,12310563 |
| | | | 4 | -2 | 3,16227766 | 4 | 13 | | -30,963757 | 4,12310563 |
| | | | 4 | 2 | 3,16227766 | 4 | 7 | | -30,963757 | 4,12310563 |
| Wurzel(13) | 0,5547002 | 45 | 1 | -5 | 3,60555128 | 4 | 10 | 1 5 | -30,963757 | 4,12310563 |
| | | | 1 | 5 | 3,60555128 | 4 | -5 | | -30,963757 | 4,12310563 |
| | | | 5 | -1 | 3,60555128 | 4 | 14 | | -30,963757 | 4,12310563 |
| | | | 5 | 1 | 3,60555128 | 4 | 11 | | -30,963757 | 4,12310563 |
| 4 | 0,5 | 49 | 4 | -4 | 4 | 4 | 16 | 1 5 | -30,963757 | 4,12310563 |
| | | | 4 | 4 | 4 | 4 | 4 | | -30,963757 | 4,12310563 |
| Wurzel(17) | 0,48507125 | 57 | 3 | -5 | 4,12310563 | 5 | 19 | 1 8 | -33,690068 | 5,09901951 |
| | | | 3 | 5 | 4,12310563 | 5 | -1 | | -33,690068 | 5,09901951 |
| | | | 5 | -3 | 4,12310563 | 5 | 21 | | -33,690068 | 5,09901951 |
| | | | 5 | 3 | 4,12310563 | 5 | 9 | | -33,690068 | 5,09901951 |
| 3 Wurzel(2) | 0,47140452 | 61 | 0 | 6 | 4,24264069 | 5 | -12 | 2 2 | -33,690068 | 5,09901951 |
| | | | 6 | 0 | 4,24264069 | 5 | 18 | | -33,690068 | 5,09901951 |
| 2 Wurzel(5) | 0,4472136 | 69 | 2 | -6 | 4,47213595 | 5 | 18 | 2 3 | -33,690068 | 5,09901951 |
| | | | 2 | 6 | 4,47213595 | 5 | -6 | | -33,690068 | 5,09901951 |
| | | | 6 | -2 | 4,47213595 | 5 | 22 | | -33,690068 | 5,09901951 |
| | | | 6 | 2 | 4,47213595 | 5 | 14 | | -33,690068 | 5,09901951 |
| 5 | 0,4 | 81 | 1 | -7 | 5 | 5 | 17 | 2 4 | -33,690068 | 5,09901951 |
| | | | 1 | 7 | 5 | 5 | -11 | | -33,690068 | 5,09901951 |
| | | | 5 | -5 | 5 | 5 | 25 | | -33,690068 | 5,09901951 |
| | | | 5 | 5 | 5 | 5 | 5 | | -33,690068 | 5,09901951 |
| | | | 7 | 1 | 5 | 5 | 19 | | -33,690068 | 5,09901951 |
| | | | 7 | -1 | 5 | 5 | 23 | | -33,690068 | 5,09901951 |
| Wurzel(26) | 0,39223227 | 89 | 4 | -6 | 5,09901951 | 6 | 29 | 3 2 | -35,537678 | 6,08276253 |
| | | | 4 | 6 | 5,09901951 | 6 | -1 | | -35,537678 | 6,08276253 |
| | | | 6 | -4 | 5,09901951 | 6 | 31 | | -35,537678 | 6,08276253 |
| | | | 6 | 4 | 5,09901951 | 6 | 11 | | -35,537678 | 6,08276253 |
| Wurzel(29) | 0,37139068 | 97 | 3 | -7 | 5,38516481 | 6 | 28 | 3 3 | -35,537678 | 6,08276253 |
| | | | 3 | 7 | 5,38516481 | 6 | -7 | | -35,537678 | 6,08276253 |
| | | | 7 | -3 | 5,38516481 | 6 | 32 | | -35,537678 | 6,08276253 |
| | | | 7 | 3 | 5,38516481 | 6 | 17 | | -35,537678 | 6,08276253 |
| 4 Wurzel(2) | 0,35355339 | 101 | 0 | 8 | 5,65685425 | 6 | -20 | 3 3 | -35,537678 | 6,08276253 |
| | | | 8 | 0 | 5,65685425 | 6 | 28 | | -35,537678 | 6,08276253 |
| Wurzel(34) | 0,34299717 | 109 | 2 | -8 | 5,83095189 | 6 | 27 | 3 4 | -35,537678 | 6,08276253 |
| | | | 2 | 8 | 5,83095189 | 6 | -13 | | -35,537678 | 6,08276253 |
| | | | 8 | -2 | 5,83095189 | 6 | 33 | | -35,537678 | 6,08276253 |

(fortgesetzt)

| A | B | C | D | E | F | G | H | I | J | K |
|---|---|---|---|---|---|---|---|---|---|---|
| | | | 8 | 2 | 5,83095189 | 6 | 23 | | -35,537678 | 6,08276253 |
| 6 | 0,33333333 | 113 | 6 | -6 | 6 | 6 | 36 | 3 4 | -35,537678 | 6,08276253 |
| | | | 6 | 6 | 6 | 6 | 6 | | -35,537678 | 6,08276253 |
| Wurzel(37) | 0,32879797 | 121 | 5 | -7 | 6,08276253 | 7 | 41 | 3 9 | -36,869898 | 7,07106781 |
| | | | 5 | 7 | 6,08276253 | 7 | -1 | | -36,869898 | 7,07106781 |
| | | | 7 | -5 | 6,08276253 | 7 | 43 | | -36,869898 | 7,07106781 |
| | | | 7 | 5 | 6,08276253 | 7 | 13 | | -36,869898 | 7,07106781 |
| 2 Wurzel(10) | 0,31622777 | 129 | 4 | -8 | 6,32455532 | 7 | 40 | 3 9 | -36,869898 | 7,07106781 |
| | | | 4 | 8 | 6,32455532 | 7 | -8 | | -36,869898 | 7,07106781 |
| | | | 8 | -4 | 6,32455532 | 7 | 44 | | -36,869898 | 7,07106781 |
| | | | 8 | 4 | 6,32455532 | 7 | 20 | | -36,869898 | 7,07106781 |
| Wurzel(41) | 0,31234752 | 137 | 1 | -9 | 6,40312424 | 7 | 31 | 4 5 | -36,869898 | 7,07106781 |
| | | | 1 | 9 | 6,40312424 | 7 | -23 | | -36,869898 | 7,07106781 |
| | | | 9 | -1 | 6,40312424 | 7 | 39 | | -36,869898 | 7,07106781 |
| | | | 9 | 1 | 6,40312424 | 7 | 33 | | -36,869898 | 7,07106781 |
| 3 Wurzel(5) | 0,2981424 | 145 | 3 | -9 | 6,70820393 | 7 | 39 | 4 6 | -36,869898 | 7,07106781 |
| | | | 3 | 9 | 6,70820393 | 7 | -15 | | -36,869898 | 7,07106781 |
| | | | 9 | -3 | 6,70820393 | 7 | 45 | | -36,869898 | 7,07106781 |
| | | | 9 | 3 | 6,70820393 | 7 | 27 | | -36,869898 | 7,07106781 |
| 7 | 0,28571429 | 149 | 7 | -7 | 7 | 7 | 49 | 4 6 | -36,869898 | 7,07106781 |
| | | | 7 | 7 | 7 | 7 | 7 | | -36,869898 | 7,07106781 |
| 5 Wurzel(2) | 0,28284271 | 161 | 0 | 10 | 7,07106781 | 8 | -35 | 5 2 | -37,874984 | 8,06225775 |
| | | | 10 | 0 | 7,07106781 | 8 | 45 | | -37,874984 | 8,06225775 |
| | | | 6 | -8 | 7,07106781 | 8 | 55 | | -37,874984 | 8,06225775 |
| | | | 6 | 8 | 7,07106781 | 8 | -1 | | -37,874984 | 8,06225775 |
| | | | 8 | -6 | 7,07106781 | 8 | 57 | | -37,874984 | 8,06225775 |
| | | | 8 | 6 | 7,07106781 | 8 | 15 | | -37,874984 | 8,06225775 |
| 2 Wurzel(13) | 0,2773501 | 169 | 2 | - 10 | 7,21110255 | 8 | 44 | 5 3 | -37,874984 | 8,06225775 |
| | | | 2 | 10 | 7,21110255 | 8 | -26 | | -37,874984 | 8,06225775 |
| | | | 10 | -2 | 7,21110255 | 8 | 52 | | -37,874984 | 8,06225775 |
| | | | 10 | 2 | 7,21110255 | 8 | 38 | | -37,874984 | 8,06225775 |
| Wurzel(53) | 0,27472113 | 177 | 5 | -9 | 7,28010989 | 8 | 54 | 5 3 | -37,874984 | 8,06225775 |
| | | | 5 | 9 | 7,28010989 | 8 | -9 | | -37,874984 | 8,06225775 |
| | | | 9 | -5 | 7,28010989 | 8 | 58 | | -37,874984 | 8,06225775 |
| | | | 9 | 5 | 7,28010989 | 8 | 23 | | -37,874984 | 8,06225775 |
| Wurzel(58) | 0,26261287 | 185 | 4 | 10 | 7,61577311 | 8 | 53 | 6 0 | -37,874984 | 8,06225775 |
| | | | 4 | 10 | 7,61577311 | 8 | -17 | | -37,874984 | 8,06225775 |
| | | | 10 | -4 | 7,61577311 | 8 | 59 | | -37,874984 | 8,06225775 |
| | | | 10 | 4 | 7,61577311 | 8 | 31 | | -37,874984 | 8,06225775 |

Die vorstehenden Berechnungen zeigen, dass je kleiner der Füllfaktor wird, die Frequenzen mit größerem Betrag immer weniger "vernachlässigbar" werden. D.h. für viele Fälle wird man -- falls man immer die richtigen Phasenschritte fährt -- unter Umständen auch ein paar Bilder weniger nehmen können um artefaktfreie Bilder zu erhalten. Wenn sehr wenige Bilder aufgenommen werden, also wenige Positionen de Probe abgetastet werden bleiben erst 1, bzw. 2 und bei ganz wenigen Bildern die 3 Hexagon Frequenzen als Raster übrig.

In Ausführungsformen der vorliegenden Erfindung kann, um das Störsignal über das gesamte Bildfeld in einem Rohbild aus den Bereichen außerhalb der (Beleuchtungs-) Inseln zu interpolieren, ein speziell an das Problem angepasster Filterkern verwendet werden.

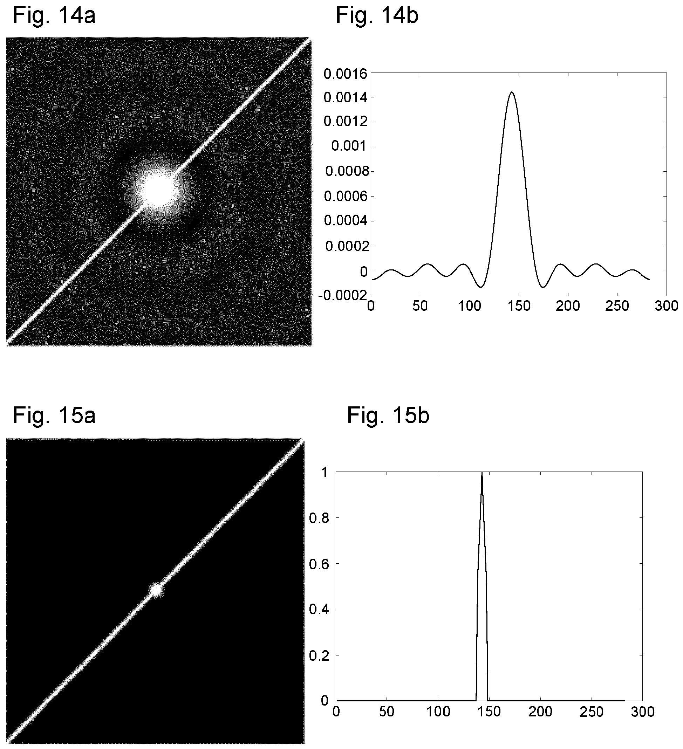

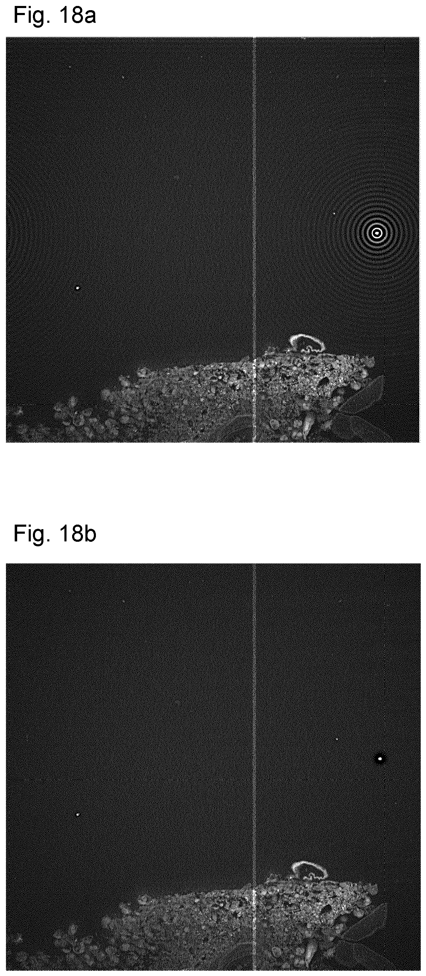

Abbildungen 14 und 15 zeigen einen einfachen Tiefpassfilters gemäß dem Stand der Technik - d.h. eine leicht apodisierte Kreisfunktion im Fourierraum (Abbildung 15) als naheliegendste Lösung; auch hier zeigt Abbildung "a" die Bilddaten und Abbildung "b" die Signalintensität entlang der weißen Line in Abbildung "a" als Line Plot. Abbildung 14 zeigt den Filter (d.h. den Faltungskern) im Ortsraum und Abbildung 15 den Tiefpass im Fourierraum. Hierbei wird das Störsignal ausschließlich aus den niederfrequenten Anteilen des gemessenen Rohbilds interpoliert. Dies hat den Nachteil, dass die seitlichen Ausläufer des entsprechenden Faltungskerns (gezeigt in Abbildung 14a) bei sehr hellen Punkten bzw. großen Helligkeitsunterschieden in der Probe zu sogenannten "Ringing-Artefakten" führen kann (siehe Abbildung 18a).

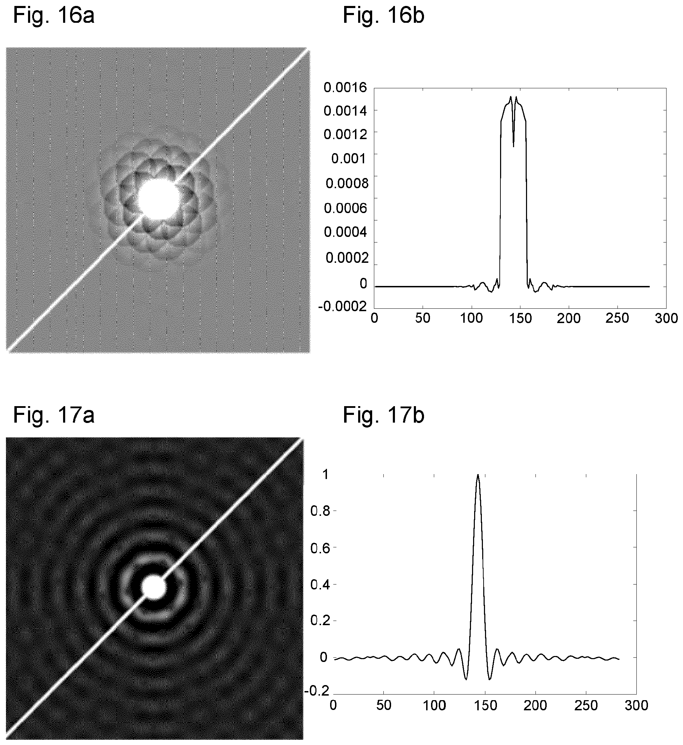

Um dies zu umgehen kann statt eines Tiefpassfilters im Frequenzraum zunächst von einer Kreisfunktion im Ortsraum ausgegangen werden, wie in Abbildungen 16 und 17 dargestellt, wobei Abbildung 16 den Faltungskern im Ortsraum und Abbildung 17 den entsprechenden Filter im Fourierraum zeigt. Auch wenn hierbei der Durchmesser der Kreisfunktion groß genug (d.h. größer als die Periode des Hexagons) gewählt wird, ist dieser Filter nicht dazu geeignet das hexagonale bzw. schachbrettartige Muster aus dem Störsignal zu entfernen. Um dies zusätzlich zu erreichen wird der Filter im Fourierraum zusätzlich mit einem Frequenzfilter versehen, der auf die in dem jeweiligen Anregungsmuster enthaltenen Frequenzen angepasst ist. Dies ergibt einen Faltungskern, der sowohl das Muster vollständig aus den Störsignal-Bildern entfernen (d.h. das Störsignal interpolieren) kann als auch das oben beschriebene Ringing-Problem des Tiefpass-Filters vollständig beseitigt.

Abbildung 18 zeigt einen Vergleich der Anwendung eines Faltungskerns beziehungsweise Tiefpassfilters, wie in den Abbildungen 14 und 15 beschrieben in Abbildung 18a, mit der Anwendung eines Faltungskerns bzw. Tiefpassfilters wie in den Abbildungen 16 und 17 beschriebenen angepassten Faltungskern/Fourierfilter in Abbildung 18b.

Der Schutzumfang dieser Offenbarung ist nicht auf die hierin beschriebenen oder veranschaulichten Ausführungsbeispiele beschränkt. Obwohl diese Offenbarung die jeweiligen Ausführungsformen hierin als bestimmte Komponenten, Elemente, Merkmale, Funktionen, Operationen oder Schritte umfassend beschreibt und veranschaulicht, können zudem beliebige dieser Ausführungsformen beliebige Kombinationen oder Permutationen beliebiger Komponenten, Elemente, Merkmale, Funktionen, Operationen oder Schritte, die irgendwo hierin beschrieben oder veranschaulicht sind, umfassen, die ein durchschnittlicher Fachmann begreifen würde. Obwohl diese Offenbarung bestimmte Ausführungsformen als bestimmte Vorteile bereitstellend beschrieben oder veranschaulicht, können zudem bestimmte Ausführungsformen keine, einige oder alle dieser bestimmten Vorteile bereitstellen.

## Patentansprüche

1. Verfahren zur Generierung mikroskopischer Schichtaufnahmen 3-dimensionaler fluoreszierender Objekte in einer Probe (1), umfassend:

   Beleuchten wenigstens eines ersten Bereichs der Probe (1) durch ein aus einer Vielzahl von Lichtinseln gebildetes regelmäßiges Beleuchtungsmuster (9), wobei die Lichtinseln im Beleuchtungsmusters (9) in einem solchen Abstand angeordnet sind, dass die Anregungsintensität außerhalb der Inselbereiche im Fokus des Mikroskopobjektivs (3) gegen Null geht;
   Detektieren des von der Probe emittierten Emissionssignals zur Erzeugung eines Rohbildes des ersten Bereichs der Probe (1);
   wobei die folgenden Verfahrensschritte auf das Rohbild angewendet werden:

      Interpolation von ersten Störsignalen, die aus Regionen außerhalb der den Beleuchtungsinseln entsprechenden Emissionssignale stammen;
      Erzeugen eines 2-dimensionalen Störsignal-Landkarte aus den interpolierten Störsignalen; und
      Erzeugen eines von Störsignalen befreiten Emissionsbilds des im Muster-Raster beleuchteten Objekts durch Subtraktion des 2-dimensionalen Störsignal-Landkarte vom detektierten Emissionssignal.

2. Verfahren nach Anspruch 1, wobei das Beleuchtungsmuster (9) so gewählt wird, dass, in Abhängigkeit von der Probe (1), das Signal-Rausch-Verhältnis optimiert wird.

**3.** Verfahren nach Anspruch 1 oder 2, ferner umfassend das wiederholte Verschieben des Beleuchtungsmusters (9) relativ zur Probe (1) oder der Probe (1) relativ zum Beleuchtungsmuster (9) unter beibehalten der Fokusebene zur Beleuchtung eines weiteren Bereichs der Probe (1) und die Wiederholung des Verfahrens an der jeweiligen neuen Position des Beleuchtungsmusters (9) relativ zur Probe (1).

**4.** Verfahren nach Anspruch 3, ferner umfassend das wiederholte Verschieben bis die minimale Anzahl an Verschiebungen erreicht wird, bis alle Bereiche der Probe (1) wenigstens einmal beleuchtet wurden.

**5.** Verfahren nach einem der vorstehenden Ansprüche, wobei das Beleuchtungsmuster (9) so gewählt wird, dass der Abstand der Beleuchtungsinseln hinsichtlich einer vorgegebenen Anzahl an aufzunehmende Bilder und einem vorgegebenen Kontrast optimiert wird.

**6.** Verfahren nach einem der vorstehenden Ansprüche, ferner umfassend das additive Zusammenfügen der von Störsignalen befreiten Emissionsbildern zu einer Schichtaufnahme der Probe (1) in der betreffenden Fokusebene.

**7.** Verfahren nach einem der vorstehenden Ansprüche, wobei ein gemessene Emissionssignal für jede einzelne Position des Beleuchtungsmusters (9) auf der Probe (1) mit einem mittels der Punktspreiz-Funktion des verwendenden Mikroskops berechneten Emissionssignal verglichen wird und aus der Differenz beider Signale zweite Störsignale ermittelt werden.

**8.** Verfahren nach Anspruch 7, wobei das Störsignal durch iterative Entfaltung weiter reduziert wird, indem neben dem Objektsignal aus den Inseln auch die Anregungsintensitäten in den Rohbildern iterativ berechnet werden, wobei sich die Iterationszyklen für Objektsignale und Anregungsintensitäten jeweils abwechseln.

**9.** Verfahren nach einem der vorstehenden Ansprüche, wobei Störsignale unter Einbeziehung benachbarter Fokus-Ebenen bestimmt werden.

**10.** Verfahren nach einem der vorstehenden Ansprüche, wobei die Fläche der Beleuchtungsinseln in der Fokusebene zwischen 5 und 20% der gesamten, in einem Messvorgang vom Muster (9) beleuchteten Fläche ist.

**11.** Vorrichtung zur Generierung mikroskopischer Schichtaufnahmen 3-dimensionaler fluoreszierender Objekte in einer Probe (1), umfassend:

ein Objektiv (3);
eine Beleuchtungseinheit zum Beleuchten der Probe in Form eines aus einer Vielzahl von Lichtinseln gebildetes Beleuchtungsmuster (9), wobei die Lichtinseln im Beleuchtungsmusters (9) in einem solchen Abstand angeordnet sind, dass die Anregungsintensität außerhalb der Inselbereiche im Fokus des Mikroskopobjektivs (3) gegen Null geht;
ein Detektor (10) zum Erfassen eines von der Probe (1) emittierten Emissionssignalen;
einer Anordnung zum Verschieben des Beleuchtungsmusters (9) relativ zur Probe (1) oder der Probe (1) relativ zum Beleuchtungsmuster (9);
sowie wenigstens eine Steuereinheit,
wobei die Vorrichtung konfiguriert ist, ein Verfahren nach einem der Ansprüche 1 bis 10 auszuführen.

**12.** Computerprogramm, umfassend Befehle, die bei der Ausführung des Programms durch eine Vorrichtung nach Anspruch 11 diese veranlassen, ein Verfahren nach einem der Ansprüche 1 bis 10 auszuführen.

**13.** Computerlesbares Speichermedium, umfassend Befehle, die bei der Ausführung durch eine Vorrichtung nach Anspruch 11 diese veranlassen, ein Verfahren nach einem der Ansprüche 1 bis 10 auszuführen.

## Claims

**1.** A method for generating microscopic layer images of 3-dimensional fluorescent objects in a sample (1), the method comprising:

illuminating at least a first region of the sample (1) with a regular illumination pattern (9) formed by a plurality of light islands, wherein the light islands in the illumination pattern (9) are arranged with such spacing that the excitation intensity outside the island regions in the focus of the microscope's objective (3) approaches zero;
detecting the emission signal emitted by the sample to generate a raw image of the first region of the sample (1);
wherein the following process steps are applied to the raw image:

> interpolation of first interference signals that originate from regions outside the emission signals corresponding to the illumination islands;
> generating a 2-dimensional interference signal map from the interpolated interference signals; and
> generating an emission image, freed from interference signals, of the object illuminated in the pattern grid by subtracting the 2-dimensional interference signal map from the detected emission signal.

2. The method of claim 1, wherein the illumination pattern (9) is selected such that the signal-to-noise ratio is optimized depending on the sample (1).

3. The method of either of claims 1 or 2, further comprising repeatedly shifting the illumination pattern (9) relative to the sample (1), or the sample (1) relative to the illumination pattern (9), while maintaining the focal plane for illuminating a further region of the sample (1), and repeating the method at the respective new position of the illumination pattern (9) relative to the sample (1).

4. The method of claim 3, further comprising repeated shifting until the minimum number of shifts is reached, until all regions of the sample (1) have been illuminated at least once.

5. The method of any preceding claim, wherein the illumination pattern (9) is selected in such a way that the spacing between the illumination islands is optimized with respect to a predetermined number of images to be acquired and a predetermined contrast.

6. The method of any preceding claim, further comprising additively combining the emission images freed from interfering signals to form a layer image of the sample (1) in the respective focal plane.

7. The method of any preceding claim, wherein a measured emission signal for each individual position of the illumination pattern (9) on the sample (1) is compared with an emission signal calculated using the point-spread function of the microscope used, and second interference signals are determined based on the difference between the two signals.

8. The method of claim 7, wherein the interference signal is further reduced by iterative deconvolution by iteratively calculating, in addition to the object signal from the islands, also the excitation intensities in the raw images, the iteration cycles for object signals and excitation intensities alternating in each case.

9. The method of any preceding claim, wherein interference signals are determined with the inclusion of adjacent focal planes.

10. The method of any preceding claim, wherein the area of the illumination islands in the focal plane is between 5 and 20% of the total area illuminated by the pattern (9) in a measuring process.

11. A device for generating microscopic layer images of 3-dimensional fluorescent objects in a sample (1), the device comprising:

> an objective (3);
> an illumination unit for illuminating the sample in the form of an illumination pattern (9) formed by a plurality of light islands, wherein the light islands in the illumination pattern (9) are arranged with such spacing that the excitation intensity outside the island regions in the focus of the microscope's objective (3) approaches zero;
> a detector (10) for detecting an emission signal emitted by the sample (1);
> an arrangement for shifting the illumination pattern (9) relative to the sample (1), or the sample (1) relative to the illumination pattern (9);
> and at least one control unit, wherein the device is configured to carry out a method according to any one of claims 1 to 10.

12. A computer program comprising instructions which, when the program is executed by a device according to claim 11, cause said device to perform a method according to any one of claims 1 to 10.

**EP 4 414 765 B1**

13. A computer-readable storage medium comprising instructions which, when executed by a device according to claim 11, cause said device to perform a method according to any one of claims 1 to 10.

**Revendications**

1. Procédé pour générer des images microscopiques de tranche optique d'objets fluorescents tridimensionnels dans un échantillon (1), comprenant :

> l'éclairage d'au moins une première zone de l'échantillon (1) par un motif d'éclairage régulier (9) formé d'une pluralité d'îlots lumineux, les îlots lumineux dans le motif d'éclairage (9) étant disposés à une distance telle que l'intensité d'excitation en dehors des zones des îlots au foyer de l'objectif du microscope (3) tend vers zéro ;
> la détection du signal d'émission émis par l'échantillon pour générer une image brute de la première zone de l'échantillon (1) ;
> les étapes suivantes du procédé étant appliquées à l'image brute :
>
>> interpolation des premiers signaux parasites provenant de régions situées en dehors des signaux d'émission correspondant aux îlots d'éclairage ;
>> génération d'une carte bidimensionnelle des signaux parasites à partir des signaux parasites interpolés ; et
>> génération d'une image d'émission débarrassée des signaux parasites de l'objet éclairé dans la trame de motifs par soustraction de la carte bidimensionnelle des signaux parasites du signal d'émission détecté.

2. Procédé selon la revendication 1, dans lequel le motif d'éclairage (9) est choisi de manière à optimiser le rapport signal/bruit en fonction de l'échantillon (1).

3. Procédé selon la revendication 1 ou 2, comprenant en outre le déplacement répété du motif d'éclairage (9) par rapport à l'échantillon (1) ou de l'échantillon (1) par rapport au motif d'éclairage (9) tout en maintenant le plan focal pour éclairer une autre zone de l'échantillon (1) et la répétition du procédé à la nouvelle position respective du motif d'éclairage (9) par rapport à l'échantillon (1).

4. Procédé selon la revendication 3, comprenant en outre le déplacement répété jusqu'à ce que le nombre minimal de déplacements soit atteint, jusqu'à ce que toutes les zones de l'échantillon (1) aient été éclairées au moins une fois.

5. Procédé selon l'une des revendications précédentes, dans lequel le motif d'éclairage (9) est choisi de manière à optimiser la distance entre les îlots d'éclairage en fonction d'un nombre prédéfini d'images à enregistrer et d'un contraste prédéfini.

6. Procédé selon l'une des revendications précédentes, comprenant en outre l'assemblage additif des images d'émission débarrassées des signaux parasites pour former une image de tranche optique de l'échantillon (1) dans le plan focal concerné.

7. Procédé selon l'une des revendications précédentes, dans lequel un signal d'émission mesuré pour chaque position individuelle du motif d'éclairage (9) sur l'échantillon (1) est comparé à un signal d'émission calculé à l'aide de la fonction d'étalement du point du microscope utilisé et des seconds signaux parasites sont déterminés à partir de la différence entre les deux signaux.

8. Procédé selon la revendication 7, dans lequel le signal parasite est encore réduit par déconvolution itérative, en calculant de manière itérative non seulement le signal objet à partir des îlots, mais aussi les intensités d'excitation dans les images brutes, les cycles d'itération pour les signaux objets et les intensités d'excitation alternant respectivement.

9. Procédé selon l'une des revendications précédentes, dans lequel les signaux parasites sont déterminés en tenant compte des plans focaux adjacents.

10. Procédé selon l'une des revendications précédentes, dans lequel la surface des îlots d'éclairage dans le plan focal est comprise entre 5 et 20 % de la surface totale éclairée par le motif (9) lors d'un processus de mesure.

11. Dispositif pour générer des images microscopiques de tranche optique d'objets fluorescents tridimensionnels dans

16

un échantillon (1), comprenant :

un objectif (3) ;

une unité d'éclairage pour éclairer l'échantillon sous la forme d'un motif d'éclairage (9) formé d'une pluralité d'îlots lumineux, les îlots lumineux dans le motif d'éclairage (9) étant disposés à une distance telle que l'intensité d'excitation en dehors des zones des îlots dans le foyer de l'objectif du microscope (3) tend vers zéro ;

un détecteur (10) pour détecter un signal d'émission émis par l'échantillon (1) ;

un dispositif pour déplacer le motif d'éclairage (9) par rapport à l'échantillon (1) ou l'échantillon (1) par rapport au motif d'éclairage (9) ;

ainsi qu'au moins une unité de commande, le dispositif étant configuré pour exécuter un procédé selon l'une des revendications 1 à 10.

12. Programme informatique comprenant des instructions qui, lors de l'exécution du programme par un dispositif selon la revendication 11, amènent celui-ci à exécuter un procédé selon l'une des revendications 1 à 10.

13. Support de stockage lisible par ordinateur comprenant des instructions qui, lorsqu'elles sont exécutées par un dispositif selon la revendication 11, amènent celui-ci à exécuter un procédé selon l'une des revendications 1 à 10.

Abb. 1

Abb. 2

Fig. 3a

Fig. 3b

Fig. 4a

Fig. 4b

Fig. 5a

Fig. 5b

Fig. 6a

Fig. 6b

Fig. 7a

Fig. 7b

Fig. 8a

Fig. 8b

Fig. 9a

Fig. 9b

Fig. 10a

Fig. 10b

Fig.11a

Fig. 11b

Fig. 12a

Fig. 12b

Fig. 13a

Fig. 13b

## Fig. 14a

## Fig. 14b

## Fig. 15a

## Fig. 15b

Fig. 16a

Fig. 16b

Fig. 17a

Fig. 17b

Fig. 18a

Fig. 18b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10330716 A1
- DE 102006031177 A1
- US 20160231246 A1
- US 20050153356 A1
- DE 102011114500 A1